# EUROPÄISCHE PATENTANMELDUNG

(11) **EP 0 733 685 A2**
(43) Veröffentlichungstag der Anmeldung: **25.09.1996**
(21) Anmeldenummer: 96103754.6
(22) Anmeldetag: 11.03.1996
(51) Int. Cl.: C09D 11/10, C08G 8/34, C08G 8/30

(54) **Naturharz-Montanharz-Copolymere, Verfahren zu deren Herstellung und deren Verwendung**

(30) Priorität: 17.03.1995 DE 19509647
(71) Anmelder: Vianova Resins GmbH, D-55252 Mainz-Kastel (DE)
(72) Erfinder: Wallach, Thomas, Dr., D-65597 Hünfelden (DE); Bothe, Lothar, Dr., D-55124 Mainz (DE)

(57) **Zusammenfassung**

Phenolharz-modifizierte Naturharz-Montanharz-Copolymere, die im wesentlichen aus
a) 10 bis 90 Gew.-% Naturharz oder Naturharzsäuren,
b) 1 bis 90 Gew-% Montanharz (fossiles Terpenharz),
c) 0 bis 25 Gew-% Fettsäuren oder Fettsäureverbindungen,
d) 5 bis 50 Gew-% einkernigen oder mehrkernigen Phenolen,
e) 1 bis 20 Gew.-% Aldehyden oder Aldehydacetalen,
f) 0,01 bis 2 Gew.-% Metallverbindungen aus der Gruppe IIa des Periodensystems und
g) 1 bis 20 Gew.-% polyfunktionellen Alkoholen
bestehen, eignen sich als Bindemittelharze in Beschichtungen und Druckfarben.

## Beschreibung

Die Erfindung betrifft Phenolharz-modifizierte Naturharz-Montanharz-Copolymere, Verfahren zu deren Herstellung sowie deren Verwendung als Druckfarbenharze.

An sich sind Umsetzungen von Naturharzen oder Naturharzsäuren mit anderen natürlichen oder synthetisch hergestellten Harzen bekannt. Üblicherweise werden dabei Kohlenwasserstoffharze auf Basis von Cyclopentadien, Dicyclopentadien, Cumaron, Inden oder anderen Verbindungen, die beim Cracken von Erdölfraktionen frei werden, mit Kolophonium oder Tallharz copolymerisiert oder mit Resolen und Veresterungsmitteln modifiziert (DE-A 41 36 316, EP-A 0 214 526). Ein Nachteil dieser Bindemittelharze ist jedoch, daß die damit für den Offsetdruck und Buchdruck hergestellten Druckfarben nur eine geringe Scheuerbeständigkeit aufweisen und daß die Harze oxidationsempfindlich sind.

Es ist bekannt, daß Terpenharze, die durch Modifizierung von polymerisiertem oder copolymerisiertem Pinen hergestellt werden, elastifizierende Eigenschaften besitzen und als Bindemittelharze für Druckfarben eingesetzt werden können (SU-A 1 073 249 und EP-A 0 610 632).

Der vorliegenden Erfindung lag somit die Aufgabe zugrunde, Bindemittelharze für den Offsetdruck zur Verfügung zu stellen, die nicht oxidationsempfindlich sind und Druckfarben mit hoher Scheuerbeständigkeit ergeben.

Die Aufgabe konnte gelöst werden durch Phenolharz-modifizierte Copolymerisate von Naturharzen und/oder Naturharzsäuren mit Montanharz (fossiles Terpenharz).

Gegenstand der Erfindung ist ein Phenolharz-modifiziertes Naturharz-Montanharz-Copolymer, das im wesentlichen besteht aus
a) 10 bis 90 Gew.-% Naturharz oder Naturharzsäuren,
b) 1 bis 90 Gew-% Montanharz (fossiles Terpenharz),
c) 0 bis 25 Gew-% Fettsäuren oder Fettsäureverbindungen,
d) 5 bis 50 Gew-% einkernigen oder mehrkernigen Phenolen,
e) 1 bis 20 Gew.-% Aldehyden oder Aldehydacetalen,
f) 0,01 bis 2 Gew.-% Metallverbindungen aus der Gruppe IIa des Periodensystems und
g) 1 bis 20 Gew.-% polyfunktionellen Alkoholen.

Geeignete Naturharze oder Naturharzsäuren a) sind beispielsweise Kolophonium (Baumharz), Tallharz, Wurzelharz oder teilweise hydrierte, disproportionierte sowie dimerisierte Naturharze. Die Komponente a) ist in einem Anteil von vorzugsweise 15 bis 85 Gew.-%, insbesondere 20 bis 80 Gew.-%, in das Reaktionsprodukt eingebaut.

Als Montanharze b) finden vorzugsweise die technisch gewonnenen Extrakte aus der Rohmontanwachs-Aufbereitung Verwendung. Die Montanharze bestehen insbesondere aus fossilen Terpenharzen mit einem Gehalt
Harzsäuren zwischen 15 und 45 Gew.-%,
Oxyharzsäuren zwischen 15 und 45 Gew.-%,
Terpenen und Polyterpenen zwischen 15 und 45 Gew.-%,
Terpen- und Polyterpenalkoholen zwischen 5 und 20 Gew.-%
und einem durch die üblichen Elementaranalysen ermittelten Gehalt an
Kohlenstoff zwischen 70 und 80 Gew.-%,
Wasserstoff zwischen 8 und 12 Gew.-%,
Sauerstoff zwischen 8 und 14 Gew.-%,
Schwefel zwischen 0,5 und 4 Gew.-%.
Der Anteil der Komponente b) beträgt vorzugsweise 5 bis 85 Gew.-%, insbesondere 10 bis 75 Gew.-%.

Geeignete Fettsäuren c) sind gesättigte sowie einfach oder mehrfach ungesättigte Fettsäuren mit 8 bis 28 Kohlenstoff-Atomen, deren Dimere oder Gemische aus diesen. Bevorzugt werden jedoch hydriertes Kokosfett oder aber andere gesättigten Fettsäuren verwendet. Der Anteil der Komponente c) beträgt vorzugsweise 1 bis 25 Gew.-%, insbesondere 2 bis 20 Gew.-%.

Die Phenolkomponente d) besteht aus einkernigen oder mehrkernigen Phenolen. Es können beispielsweise Phenol, verschiedene Kresole, Butylphenol, Amylphenol, Nonylphenol, Octylphenol, Phenylphenol und Bisphenole verwendet werden, vorzugsweise werden Mischungen aus Phenolen eingesetzt, die gegenüber Oxoverbindungen di- und höherfunktionell sind, besonders bevorzugt Mischungen aus Nonylphenol und Bisphenol A. Durch den relativen Anteil dieser beiden Phenolkomponenten lassen sich sowohl die Viskosität als auch die Struktur der Harze in Lösung in einfacher, vorteilhafter Weise einstellen. Der Anteil der Komponenten d) beträgt vorzugsweise 10 bis 40 Gew.-%, insbesondere 20 bis 35 Gew.-%.

Als Aldehydkomponente e) können alle üblichen Aldehyde und Aldehydacetale zur Resol- bzw. Novolakherstellung verwendet werden. Vorteilhaft wird Formaldehyd, der in wäßriger Lösung, in oligomerer oder polymerer Form vorliegt, verwendet, besonders bevorzugt ist Paraformaldehyd. Die Komponente e) wird vorzugsweise in einer Menge von 2 bis 15 Gew.-%, insbesondere 3 bis 12 Gew.-%, eingesetzt.

Geeignete Metallverbindungen f) aus den Gruppe IIa des Periodensystems sind Metalloxide und -hydroxide oder Carbonsäuresalze dieser Metalle. Besonders bevorzugt werden Magnesiumsalze, insbesondere Magnesiumoxid. Die Metallverbindung f) liegt vorzugsweise in einem Anteil von 0,02 bis 1,5 Gew.-%, insbesondere 0,1 bis 1 Gew.-%, vor.

Als polyfunktionelle Alkoholkomponente g) können alle mehrwertigen Alkohole verwendet werden, die drei oder mehr Hydroxylgruppen pro Molekül enthalten, wie Glycerin, Trimethylolpropan, Trimethylolethan, 1,2,6-Hexantriol, Pentaerythrit, Di - und Polypentaerythrit. Vorzugsweise werden trifunktionelle Alkohole verwendet, besonders bevorzugt werden Glycerin und Pentaerythrit. Die Komponente g) wird vorzugsweise in einem Anteil von 2 bis 18 Gew.-%, insbesondere 3 bis 10 Gew.-% eingesetzt.

Die genannten Prozentanteile beziehen sich immer auf die Summe der Komponenten a) bis g), die stets 100 Gew.-% beträgt. Durch Variation der Komponentenanteile lassen sich der Schmelzpunkt, die Verträglichkeit und die Viskosität des Endproduktes auf die gewünschten Werte abstimmen.

Die Erfindung umfaßt auch ein Verfahren zur Herstellung eines Phenolharz-modifizierten Naturharz-Montanharz-Copolymeren. Die Herstellung der erfindungsgemäßen Naturharz-Montanharz-Copolymere kann kontinuierlich oder diskontinuierlich erfolgen, wobei die Komponenten a) bis g) in Lösung oder vorzugsweise in Substanz bei einer Temperatur von 80 bis 300 °C, vorzugsweise 90 bis 280 °C, umgesetzt werden. Dazu wird entweder die gesamte Mischung aus allen eingesetzten Komponenten zur Reaktion gebracht, oder einzelne Komponenten werden vorgelegt und die übrigen durch Zudosierung damit umgesetzt.

Vorzugsweise werden unter einer Schutzgasatmosphäre, bei einer Temperatur von 110 bis 160 °C, zu den schmelzflüssigen Komponenten a), b) und g) die Komponenten f), d) und e), oder ein aus den Komponenten d) und e) nach dem Stand der Technik hergestelltes Resol, eingetragen. Anschließend erfolgt bei gleicher Temperatur, gegebenenfalls unter einem Druck zwischen 1 und 10 bar, die Resolbildung. Schließlich wird das Reaktionsgemisch unter Wasserabspaltung auf Temperaturen von 200 bis 280 °C erhitzt, wobei das Reaktionswasser durch Destillation, vorzugsweise durch azeotrope Destillation, entfernt wird.

Der Fortgang der Reaktion wird dabei anhand der Säurezahl des Reaktionsgemisches verfolgt. Die Säurezahl wird gemäß DIN 53402 bestimmt und kann nach Zugabe der Komponenten vorzugsweise bis zu 150 mg/g betragen. Sie fällt mit fortschreitender Umsetzung unter Wasserabspaltung fortlaufend ab. Die Kondensationsreaktion wird solange fortgesetzt, bis die erfindungsgemäße Umsetzung das gewünschte Endstadium erreicht hat und die Säurezahl auf Werte von < 50, vorzugsweise < 35 mg/g abgesunken ist. Danach werden durch Destillation unter Vakuum zwischen 1000 und 0,1 mbar, vorzugsweise 300 bis 50 mbar, die leichtflüchtigen Bestandteile entfernt und anschließend das Harz auf Raumtemperatur abgekühlt.

Die Komponenten werden vorzugsweise in zwei Stufen zur Reaktion gebracht werden, wobei in der 1. Stufe der Katalysator aktiviert wird und in der 2. Stufe die eigentliche Polykondensation erfolgt. Das Verfahren ist dadurch gekennzeichnet, daß man vorzugsweise unter einer Schutzgasatmosphäre
1) die Komponente b) bei einer Temperatur zwischen 100 und 250 °C, vorzugsweise 100 bis 180 °C, mit der Komponenten f) innerhalb von 1 bis 360 Minuten, vorzugsweise 2 bis 60 Minuten, umsetzt,
2) eine schmelzflüssige Mischung aus den Komponenten a), d), e) und g) bei gleicher Temperatur einträgt und anschließend bei Temperaturen von 80 bis 300 °C, vorzugsweise 50 bis 280 °C, unter Wasserabspaltung umsetzt,
3) durch Destillation unter Vakuum zwischen 1000 und 0,1 mbar, vorzugsweise 300 bis 50 mbar, leichtflüchtige Bestandteile entfernt und anschließend das Harz auf Raumtemperatur abkühlt.

Insbesondere wird in der 1. Stufe die schmelzflüssige oder aber in einem inerten Lösungsmittel gelöste Komponente b) bei einer Temperatur von 100 bis 250 °C, vorzugsweise 100 bis 180 °C, mit der Komponenten f) versetzt und innerhalb von 1 bis 360 Minuten, vorzugsweise 2 bis 60 Minuten, unter Rühren umgesetzt. Zweckmäßigerweise wird die Komponente f) dabei entweder in der Alkoholkomponente g) oder aber in einem inerten Lösungsmittel, beispielsweise Xylol, suspendiert, um die Umsetzung der Komponenten b) mit f) zu verbessern.

In der zweiten Reaktionsstufe werden die Komponenten a), d), e) und g) zu dem Umsetzungsprodukt aus b) und f) hinzugegeben und gemäß dem Stand der Technik bei Temperaturen von 80 bis 300 °C, vorzugsweise 90 bis 280 °C, unter Wasserabspaltung umgesetzt.

Das Molekulargewicht der erfindungsgemäßen Harze kann durch Ausschlußchromatographie der Harzlösungen in Tetrahydrofuran an Polystyrolgel nach bekannten Methoden ermittelt werden. Das gewichtsmittlere Molekulargewicht M_{w} der erfindungsgemäßen, Phenolharz-modifizierten Naturharz-Montanharz-Copolymere liegt vorzugsweise in einem Bereich von 40.000 bis 250.000, insbesondere 50.000 bis 200.000 g/mol.

Zur Bestimmung der Viskositäten werden die erfindungsgemäßen, phenolharz-modifizierten Naturharz-Montanharz-Copolymere in Firnisse überführt. Die Firnisbereitung erfolgt mit dem Thermotronic-Gerät (Hersteller: Novocontrol GmbH, 56414 Hundsangen/Deutschland). Die genauen Bedingungen für die Firnisherstellung sind in der Druckschrift *"*Quality assurance with the Thermotronic*"* Ausgabe 4/1994, Novocontrol GmbH beschrieben. Die Viskositätsmessung erfolgt mit dem Rotationsviskosimeter RV 20 (Hersteller: HAAKE, Deutschland) bei 23 °C.

Zur Charakterisierung der Lösungsviskosität der erfindungsgemäßen Harze werden 35%ige Harzfirnisse im Thermotronic bereitet, wobei als Lösungsmittel das Mineralöl "®Test Oil 6/9 ar blend" (Haltermann, Hamburg) eingesetzt wird. Bei dem Mineralöl "Test Oil ar blend" handelt es sich um ein Mischung aus einen aromatenreichen Mineralöl "PKWF 6/9 ar" (1 Teil) und Mineralöl "PKWF 6/9" (1 Teil). Das Mineralöl "Test Oil 6/9 ar blend" wird speziell für die Viskositätsmessung von Harzlösungen entwickelt. Der Siedebereich des Mineralöl "Test Oil 6/9 ar blend" liegt bei 260 bis 290 °C. Der Anilinpunkt beträgt 62 °C (ISO 2977).

Die erfindungsgemäßen Harze können in ihrer Viskositätslage in weiten Grenzen variiert werden. Die 35%igen Firnisse der erfindungsgemäßen Harze in "Test Oil 6/9 ar blend" liegen bei 23 °C und 50 s⁻¹ im Bereich von 0,1 bis 2000 dPa·s, insbesondere im Bereich von 0,5 bis 1500, bevorzugt bei 2 bis 650 dPa·s.

Die Bestimmung der Verträglichkeit der erfindungsgemäßen, phenolharzmodifizierten Naturharz-Montanharz-Copolymere mit Mineralöl erfolgt über eine optische Trübungsmessung mit Hilfe des DSM-Chemotronic der Fa. Novocontrol GmbH, Deutschland. In einer Glasküvette werden 2 g des erfindungsgemäßen Harzes und 18 g des Prüföles eingewogen und unter Rühren gemäß des im Gerät programmierten Standardprogrammes auf 230 °C aufgeheizt, bei dieser Temperatur 2 Minuten gehalten und schließlich gemäß des Programmes auf Raumtemperatur abgekühlt. Die beim Abkühlen der Harzlösung auftretende Trübung wird mittels IR- Photozellen bei einer Wellenlänge von 950 nm gemessen und die dabei gleichzeitig erfaßte Temperatur wird als Trübungstemperatur bezeichnet und ist ein Maß für die Verträglichkeit der erfindungsgemäßen Harze (vgl. *"*Cloudpoint determination with the DSM-Chemotronic*"* 3/1994 von Novocontrol GmbH).

Da es möglich ist, die Verträglichkeit mit Mineralöl der erfindungsgemäßen Harze in weiten Grenzen von extrem engverträglich bis extrem weitverträglich zu variieren, sind drei standardisierte Mineralöle zur Charakterisierung der Verträglichkeit notwendig. Zum Einsatz für die Verträglichkeitsprüfung werden daher standardisierte Prüföle eingesetzt:
- "Test Oil 6/9": für engverträgliche,
- "Test Oil 6/9 af new": für gut verträgliche und
- "Test Oil 6/9 af": für sehr gut verträgliche Harze

Erfindungsgemäß bevorzugt sind Phenolharz-modifizierte Naturharz-Montanharz-Copolymere, deren 10 Gew.-%igen Lösungen in "Test Oil 6/9" Trübungstemperaturen von vorzugsweise < 180°C, insbesondere < 120 °C, in "Test Oil 6/9" und vorzugsweise > 40°C in "Test Oil 6/9 af", insbesondere im Bereich 50 bis 160 °C, in "Test Oil 6/9 af new" gemessen, aufweisen.

Bei der erfindungsgemäßen Herstellung der Harze wird überraschenderweise gegenüber dem Stand der Technik eine deutlich verbesserte Qualitätskonstanz der Produkt festgestellt, die sich insbesondere in den deutlich geringeren Viskositätsschwankungen bemerkbar macht.

Die erfindungsgemäßen Reaktionsprodukte weisen gute Verträglichkeit mit Alkydharzen und mit Lösungsmitteln wie Mineralölen und trocknenden Ölen auf. Besonders überraschend ist ihre ausgezeichnete Unempfindlichkeit gegenüber Oxidation und die damit verbundene lange Lagerstabilität, die vorzugsweise mehr als 6 Monate, insbesondere mehr als 8 Monate beträgt.

Gegenstand der Erfindung ist auch die Verwendung der Phenolharz-modifizierten Naturharz-Montanharz-Copolymeren als Bindemittelharze in Beschichtungen und Druckfarben.

Aufgrund der guten drucktechnischen Eigenschaften können die erfindungsgemäßen, phenolharzmodifizierten Naturharz-Montanharz-Copolymereals Bindemittel für Druckfarben, insbesondere für Offsetdruck und Buchdruck eingesetzt werden. Hierbei treten der hohe Glanz, die rasche Trocknung, die rasche Lösungsmittelabgabe sowie die gute Gelierung mit Aluminiumverbindungen als besonders günstige Eigenschaften hervor. Darüber hinaus weisen die aus den erfindungsgemäßen Harzen hergestellten Druckfarben für den Offsetdruck und den Buchdruck eine hohe Scheuerfestigkeit auf, die insbesondere bei der Weiterverarbeitung von Druckerzeugnissen von Vorteil ist.

Die in den folgenden Beispielen aufgeführten Teile und Prozente beziehen sich auf das Gewicht, soweit nicht anders vermerkt. Die in den Beispielen angegebenen Säurezahlen (die zur Neutralisation von 1 g Harz benötigte Menge KOH, in mg) der erfindungsgemäßen Harze werden nach DIN 53 402 bestimmt. Die angegebenen Erweichungspunkte werden gemäß DIN 53 736 ermittelt, die Anilinpunkte werden nach ISO 2977 bestimmt.

### Beispiel 1

In einem 2 l Mehrhalskolben, versehen mit Thermometer, Rührer und Wasserabscheider mit Rückflußkühler, werden unter Inertgas 150 g Montanharz (®Harz G 7, Hoechst AG) bei 110 °C aufgeschmolzen und bei dieser Temperatur portionsweise mit 7,5 g Magnesiumoxid versetzt. Nach einer Stunde werden 503 g schmelzflüssiges Kolophonium, 253 g Nonylphenol, 46 g Bisphenol A, 60 g Glycerin und 84 g Paraformaldehyd hinzugegeben und diese Mischung eine weitere Stunde bei 110 °C gerührt. Danach wird das Reaktionsgut auf 240 °C erwärmt und das sich im Laufe der Reaktion bildende Reaktionswasser wird mittels Wasserabscheider entfernt. Nach Erreichen von 240 °C werden in Abständen von 1 Stunde Proben entnommen und die Säurezahl bestimmt. Nach 5 Stunden Reaktionszeit bzw. bei Erreichen der Säurezahl von 35 mg/g werden die leichtflüchtigen Verbindungen unter Wasserstrahlvakuum bei 100 mbar entfernt und das Reaktionsgemisch auf Raumtemperatur abgekühlt. Es wird ein klares Harz erhalten, welches einen Schmelzpunkt von 140 °C, eine Säurezahl von 32 mg/g, eine Viskosität 35 %ig in Mineralöl "Test Oil 6/9 ar Blend" (Siedebereich 260 bis 290 °C, Anilinpunkt 65 °C) von 500 dPa·s und eine Trübungstemperatur in standardisiertem Mineralöl "Test Oil 6/9 af new" (Siedebereich 260 bis 290 °C, Anilinpunkt 90 °C) von 150 °C aufweist. Das gewichtsmittlere Molekulargewicht M_{w} des Harzes beträgt 150.000 g/mol.

### Beispiel 2

In einem 6 l Rührautoklaven werden unter Inertgas 1620 g Montanharz (®Harz G 7) bei 110 °C aufgeschmolzen und bei dieser Temperatur portionsweise mit 24 g Magnesiumoxid, welches in 100 g Glycerin suspendiert ist, versetzt. Nach 30 Minuten werden 90 g Glycerin, 800 g Nonylphenol, 160 g Bisphenol A und 480 g Kolophonium und 270 g Paraformaldehyd hinzugegeben, die Apparatur druckdicht verschlossen und das Reaktionsgut unter Rühren auf 140 °C erhitzt. Dabei stellt sich ein Druck von 2,2 bar ein. Nach weiteren 2 Stunden wird auf Normaldruck entspannt und die Reaktionstemperatur auf 250 °C erhöht. Nach Erreichen von 250 °C werden in Abständen von 1 Stunde Proben entnommen und die Säurezahl bestimmt. Nach 3 Stunden Reaktionszeit bzw. bei Erreichen der Säurezahl von 20 mg/g werden die leichtflüchtigen Verbindungen unter Vakuum bei 100 mbar entfernt und das Reaktionsgemisch auf Raumtemperatur abgekühlt. Es wird ein klares Harz erhalten, welches einen Schmelzpunkt von 130 °C, eine Säurezahl von 18 mg/g, eine Viskosität 35%ig in Mineralöl "Test Oil 6/9 ar Blend" (Siedebereich 260 bis 290 °C, Anilinpunkt 65 °C) von 200 dPa·s und eine Trübungstemperatur in standardisiertem Mineralöl "Test Oil 6/9 af new" (Siedebereich 260 bis 290 °C, Anilinpunkt 90 °C) von 100 °C aufweist. Das gewichtsmittlere Molekulargewicht M_{w} des Harzes beträgt 100.000 g/mol.

### Beispiel 3

Es wird gearbeitet wie in Beispiel 1 mit der Änderung, daß statt 60 g Glycerin 66,5 g Pentaerythrit eingesetzt werden und die Reaktionstemperatur nicht 240 °C sondern 260 °C beträgt. Das resultierende Produkt besitzt einen Schmelzpunkt von 155 °C, eine Säurezahl von 28 mg/g, eine Viskosität 35%ig in Mineralöl "Test Oil 6/9 ar Blend" (Siedebereich 260 bis 290 °C, Anilinpunkt 65 °C) von 1100 dPa·s und eine Trübungstemperatur in standardisiertem Mineralöl (Siedebereich 260 bis 290 °C` Anilinpunkt 90 °C) von 156 °C aufweist. Das gewichtsmittlere Molekulargewicht M_{w} des Harzes beträgt 40.000 g/mol.

### Beispiel 4

Es wird gearbeitet wie in Beispiel 1 mit der Änderung, daß zusätzlich in der zweiten Stufe 100 g hydriertes Kokosfett der Reaktionsmischung hinzugegeben werden. Das resultierende Produkt besitzt einen Schmelzpunkt von 120 °C, eine Säurezahl von 25 mg/g, eine Viskosität 35 %ig in Mineralöl "Test Oil 6/9 ar Blend" (Siedebereich 260 bis 290 °C, Anilinpunkt 65 °C) von 100 dPa·s und eine Trübungstemperatur in Mineralöl "Test Oil 6/9 af new" (Siedebereich 260 bis 290 °C, Anilinpunkt 90 °C) von 60 °C aufweist. Das gewichtsgemittelte Molekulargewicht M_{w} des Harzes beträgt 65.000 g/mol.

### Beispiel 5

In einem heizbaren Rührgefäß werden unter Inertgas 45,0 g des in Beispiel 1 hergestellten Harzes in 45,0 g Mineralöl, dessen Siedebereich bei 240 bis 270 °C liegt, und 10,0 g Alkydharz (®Alftalat AL 766, Hoechst) bei 180 °C gelöst, die Lösung 30 Minuten bei 180 °C gerührt und anschließend auf Raumtemperatur abgekühlt. 72,0 g dieses Firnisses werden mit 28,0 g Permanentrubin (Rotpigment, Hoechst) auf einem Dreiwalzenstuhl zu einer Pigmentpaste dispergiert. Von dieser Pigmentpaste werden 64,3 g mit 31,7 g des zuvor hergestellten Firnisses zu einer Offsetfarbe vermischt. Diese zeigt sowohl beim Offsetdruck als auch beim Buchdruck ein sehr gutes Druckverhalten. Die Offsetfarbe zeichnet sich durch ein sehr gutes Farbübertragungsvermögen und eine sehr hohe Scheuerfestigkeit aus.

## Patentansprüche

1. Phenolharz-modifiziertes Naturharz-Montanharz-Copolymer, das im wesentlichen besteht aus
a) 10 bis 90 Gew.-% Naturharz oder Naturharzsäuren,
b) 1 bis 90 Gew-% Montanharz (fossiles Terpenharz),
c) 0 bis 25 Gew-% Fettsäuren oder Fettsäureverbindungen,
d) 5 bis 50 Gew-% einkernigen oder mehrkernigen Phenolen,
e) 1 bis 20 Gew.-% Aldehyden oder Aldehydacetalen,
f) 0,01 bis 2 Gew.-% Metallverbindungen aus der Gruppe IIa des Periodensystems und
g) 1 bis 20 Gew.-% polyfunktionellen Alkoholen.

2. Phenolharz-modifiziertes Naturharz-Montanharz-Copolymer nach Anspruch 1, dadurch gekennzeichnet, daß das gewichtsmittlere Molekulargewicht (M_{w}) des Copolymeren 40.000 bis 250.000 g/mol beträgt.

3. Phenolharz-modifiziertes Naturharz-Montanharz-Copolymer nach Anspruch 1, dadurch gekennzeichnet, daß eine 35 Gew.-%ige Lösung des Copolymeren in Mineralöl "Test Oil 6/9 ar blend" (Siedebereich 260 bis 290 °C, Anilinpunkt 65 °C) bei Messungen im Rotationsviskosimeter bei 23 °C bei einer Schergeschwindigkeit von 50 s⁻¹ eine Viskosität von 0,5 dPa·s bis 1500 dPa·s, aufweist.

4. Phenolharz-modifiziertes Naturharz-Montanharz-Copolymer nach Anspruch 1, dadurch gekennzeichnet, daß eine 10 Gew.-%ige Lösung des Copolymeren in Mineralöl "Test Oil 6/9 af new" (Siedebereich 260 bis 290 °C, Anilinpunkt 90 °C) bei Messungen im DSM-Chemotronic eine Trübungstemperatur von < 180 °C aufweist.

5. Verfahren zur Herstellung eines Phenolharz-modifizierten Naturharz-Montanharz-Copolymeren nach Anspruch 1, dadurch gekennzeichnet, daß die Komponenten a) bis g) in Lösung oder vorzugsweise in Substanz bei einer Temperatur von 80 bis 200 °C umgesetzt werden.

6. Verfahren zur Herstellung eines Phenolharz-modifizierten Naturharz-Montanharz-Copolymeren nach Anspruch 1, dadurch gekennzeichnet, daß
1) die Komponente b) bei einer Temperatur zwischen 100 und 250 °C, mit der Komponenten f) innerhalb von 1 bis 360 Minuten umgesetzt wird,
2) eine schmelzflüssige Mischung aus den Komponenten a), d), e) und g) bei gleicher Temperatur eingetragen wird und anschließend bei Temperaturen von 80 bis 300 °C, unter Wasserabspaltung umgesetzt wird,
3) durch Destillation unter Vakuum zwischen 1000 und 0,1 mbar, leichtflüchtige Bestandteile entfernt werden und anschließend das Harz auf Raumtemperatur abgekühlt wird.

7. Verwendung der Phenolharz-modifizierten Naturharz-Montanharz-Copolymeren nach Anspruch 1 als Bindemittelharz in Beschichtungen.

8. Verwendung der Phenolharz-modifizierten Naturharz-Montanharz-Copolymeren nach Anspruch 1 als Bindemittel in Druckfarben für den Offsetdruck und Buchdruck.
